**Europäisches Patentamt**

(19) **European Patent Office**

**Office européen des brevets**

(11) Veröffentlichungsnummer: **0 025 430**
**B1**

(12) # EUROPÄISCHE PATENTSCHRIFT

(45) Veröffentlichungstag der Patentschrift:
25.04.84

(51) Int. Cl.³: **B 32 B 29/00**, B 29 C 17/03

(21) Anmeldenummer: **80890100.3**

(22) Anmeldetag: **08.09.80**

(54) Verfahren zum Herstellen von Schichtstoff-Formteilen.

(30) Priorität: **06.09.79 AT 5876/79**

(43) Veröffentlichungstag der Anmeldung:
**18.03.81 Patentblatt 81/11**

(45) Bekanntmachung des Hinweises auf die Patenterteilung:
**25.04.84 Patentblatt 84/17**

(84) Benannte Vertragsstaaten:
**AT BE CH DE FR GB IT LI NL SE**

(56) Entgegenhaltungen:
**DE - A - 2 056 477**
**DE - A - 2 501 553**
**DE - A - 2 823 669**
**DE - C - 885 153**
**FR - A - 670 811**
**GB - A - 572 198**
**GB - A - 766 793**
**GB - A - 1 360 105**
**US - A - 2 640 517**
**US - A - 2 874 753**
**US - A - 3 615 982**

(73) Patentinhaber: **ISOVOLTA Österreichische Isolierstoffwerke Aktiengesellschaft, A-2351 Wiener Neudorf (AT)**

(72) Erfinder: **Pflug, Günther, Dr., Paniglgasse 24, A-1040 Wien (AT)**
Erfinder: **Petershofer, Georg, Dr., Hauptstrasse 26, A-2351 Wiener Neudorf (AT)**
Erfinder: **Felzmann, Horst, Volta Gasse 43/14/13, A-1210 Wien (AT)**

(74) Vertreter: **Stampfer, Heinz, ISOVOLTA Österreichische Isolierstoffwerke AG, A-2351 Wiener Neudorf (AT)**

BUNDESDRUCKEREI BERLIN

## Verfahren zum Herstellen von Schichtstoff-Formteilen

Die Erfindung bezieht sich auf ein Verfahren zum Herstellen von Schichtstoff-Formteilen, welche die Form von gebogenen Platten mit jeweils ein oder mehreren zylindermantelförmigen Oberflächenbereichen haben und die, vorteilhaft eine dekorative Oberfläche aufweisend, zum Herstellen von Gegenständen mit gerundeten Kanten dienen.

In der Möbelindustrie sowie in der Herstellung von dekorativen Strukturen ist in den letzten Jahren ein steigender Trend nach Formen zu beobachten, die gerundete Kanten haben.

Für Strukturen dieser Art, die eine dekorative Oberfläche aufweisen, werden in zunehmendem Maße sogenannte Kunstharz-Schichtpreßstoffplatten der »Postforming«-Qualität verwendet. Diese Platten bestehen aus mehreren miteinander heiß verpreßten, mit duroplastischen Bindemitteln imprägnierten Trägerbahnen, insbesondere Papierbahnen, wobei diese Bindemittel nach dem Verpressen noch nicht völlig ausgehärtet sind, und können durch Erhitzen und Biegen über eine Schablone in ihre endgültige Form gebracht werden. Wegen der geringen Reißdehnung des imprägnierten Papiers sind dabei die erzielbaren Biegeradien nicht kleiner als etwa das 8—10fache der Plattenstärke. Die Postforming-Platten haben, mit aus diesem Grunde, in der Praxis eine Stärke von 0,8—1,2 mm und können in diesen Stärken für die meisten Zwecke nicht selbsttragend eingesetzt, sondern müssen im allgemeinen zuerst gebogen und dann auf einen entsprechend geformten Träger aufgeleimt werden.

Die AT-PS 349 766 beschreibt nun die Herstellung von Schichtstoff-Formteilen, welche die Form von gebogenen Platten mit wesentlich größerer Plattendicke (nämlich 10 mm Dicke und mehr) als die bekannten Schichtpreßstoffplatten der »Postforming«-Qualität aufweisen und die demzufolge als mechanisch selbsttragende Teile eingesetzt werden können.

Bei der Herstellung dieser Schichtstoff-Formteile wird von einer heiß verformbaren ebenen Kunstharz-Schichtpreßstoffplatte ausgegangen, welche aus mehreren Einzellamellen aufgebaut ist, von denen jede für sich aus einer oder mehreren mit duroplastischen Bindemitteln imprägnierten Trägerbahnen gebildet wird, sowie aus zwischen den Einzellamellen angeordneten Schichten aus thermoplastischen Bindemitteln. Die Herstellung der Formteile aus diesen Platten erfolgt mit Hilfe von geeigneten Biege- bzw. Formwerkzeugen bei einer Temperatur, die gleich der/oder höher als die Schmelztemperatur des thermoplastischen Bindemittels ist.

Die so hergestellten Schichtstoff-Formteile können sehr vielseitig verwendet werden. Da sie jedoch ein thermoplastisches Material enthalten, entspricht ihre Temperaturstabilität nicht der von üblichen Kunstharz-Schichtpreßstoffplatten der »Postforming«-Qualität, bei welchen überdies durch flammhemmende Zusätze zu den bei der Plattenherstellung eingesetzten duroplastischen Bindemitteln eine höhere Brandwiderstandsklasse entsprechend der Qualität Typ AF nach DIN 16926 erreicht werden kann. Dies ist aber bei den in der AT-PS 349 766 beschriebenen Schichtstoff-Formteilen nicht möglich.

Hier will die Erfindung Abhilfe schaffen. Die Erfindung, wie sie in den Ansprüchen gekennzeichnet ist, löst die Aufgabe, ein Verfahren zur Herstellung von Schichtstoff-Formteilen anzugeben, welche die Form von gebogenen Platten mit jeweils ein oder mehreren zylindermantelförmigen Oberflächenbereichen haben und mit großen Plattendicken im Bereich von 10 mm und mehr hergestellt werden können, wobei die erzeugten Formteile eine zumindest gleich hohe Temperaturstabilität wie die üblichen Kunstharz-Schichtpreßstoffplatten aufweisen und bei denen überdies durch flammhemmende Zusätze zu den bei der Herstellung verwendeten duroplastischen Bindemitteln eine erhöhte Brandwiderstandsklasse erzielt werden kann.

Bei dem erfindungsgemäßen Verfahren, bei welchem man von relativ dünnen Einzellagen ausgeht, die jeweils als Schichtpreßstoffplatten durch einen Hochdruck-Heißpreßvorgang hergestellt sind, welche in einem Stapel gemeinsam verformt und schließlich zur Bildung des Formteils miteinander verbunden werden, ergeben sich gegenüber dem aus der AT-PS 349 766 bekannten Verfahren noch weitere Vorteile:

Zunächst wird nämlich die Lagerhaltung beim Formteilhersteller vereinfacht, da man mit den auf Lager gehaltenen Einzellagen Formteile unterschiedlicher Dicke herstellen kann. Außerdem sind bei Auftreten von Fehlern in der Dekoroberfläche die damit verbundenen Ausschußkosten geringer, da die mit Dekoroberflächen versehenen Einzellagen wesentlich dünner und damit billiger sind als die zum Verformen bestimmten Platten gemäß der AT-PS 349 766, bei denen sich Fehler an der Dekoroberfläche im allgemeinen erst an der fertigen Platte zeigen.

Die Erfindung wird nachstehend anhand von zwei Ausführungswegen bzw. anhand der Figuren näher erläutert.

Bei der Herstellung der Schichtstoff-Formteile gemäß der Erfindung wird von durch Kunstharz-Schichtpreßstoffplatten gebildeten Einzellagen ausgegangen, die in üblicher Weise durch Heißverpressen von mit Kunstharzen imprägnierten Papieren hergestellt werden, wobei als Imprägnierharze jeweils sogenannte »Postforming Harze« zur Anwendung gelangen, die bei der Plattenherstellung nicht vollständig aushärten. Diese Einzellagen sind:

A. Kernlagen, das sind Einzellagen, die im Inneren der Schichtpreßstoff-Formteile zu liegen kommen; sie haben eine Dicke von 0,6 bis 2 mm und werden jeweils durch Heißverpressen eines Stapels von Phenolharz imprägnierten Kernpapieren, insbesondere Natronkraftpapieren hergestellt.

B. Decklagen, das sind Einzellagen, die an den Oberflächen der Schichtstoff-Formteile zu liegen kommen und die durch Kunstharz-Schichtstoffplatten der »Postforming-Qualität« einer Dicke von 0,6 bis 1,5 mm gebildet werden und wie üblich im wesentlichen aus Phenolharz imprägnierten Kernpapieren bzw. Melaminharz imprägnierten, an einer Oberflächenseite dekorativen Deckpapieren aufgebaut sind

Diese Kern- bzw. Decklagen sind an ihren zu verklebenden Oberflächen zwecks Verbesserung der Haftfähigkeit angeschliffen.
Als Bindemittel werden eingesetzt:

C. Bindemittelbeschichtungen, die auf die zu verklebenden Oberflächen der Einzellagen aufgebracht sind. Sie bestehen vorzugsweise aus hitzehärtenden Zweikomponentenklebern auf Epoxydharz- bzw. Resorcinharz-Basis, die in kaltem Zustand auf die zu verklebenden Oberflächen aufgebracht werden;
oder

D. Klebefilme, bestehend aus Trägerlagen, insbesondere Papier, Glasfaservlies oder Kunstfaservlies, auf welche z. B. durch Imprägnierung ein lösungsmittelfreies Einkomponentenbindemittel aufgebracht ist.
Dieses Bindemittel ist bei dem zu gebenden Beispiel 2 eines auf Basis von Phenolresolharz, das mit Thermoplasten wie Polyvinylacetat oder Polyvinylbutyral modifiziert ist.

Ein erster Ausführungsweg wird nachstehend anhand eines ersten Beispiels beschrieben:

### Beispiel 1

Zur Herstellung eines Schichtstoff-Formteils mit einer Plattenstärke von 10 mm werden eingesetzt:

2 Decklagen mit Dicken von 1,0 mm, von der Art wie in Punkt B beschrieben,
4 Kernlagen mit Dicken von 2,0 mm, wie in Punkt A beschrieben, sowie
10 Lagen eines doppelseitig satinierten Papiers mit einem Flächengewicht von 50 g/m$^2$ als Gleitschichten.

Zur Bildung des zu verformenden Stapels werden auf einen plattenförmigen Support zunächst — mit der Dekoroberfläche nach unten — eine Decklage, darauf 4mal jeweils abwechselnd eine Papier-Doppellage und eine Kernlage, dann nochmals eine Papier-Doppellage und schließlich — mit der Dekoroberfläche nach oben — die zweite Decklage aufgeschichtet.

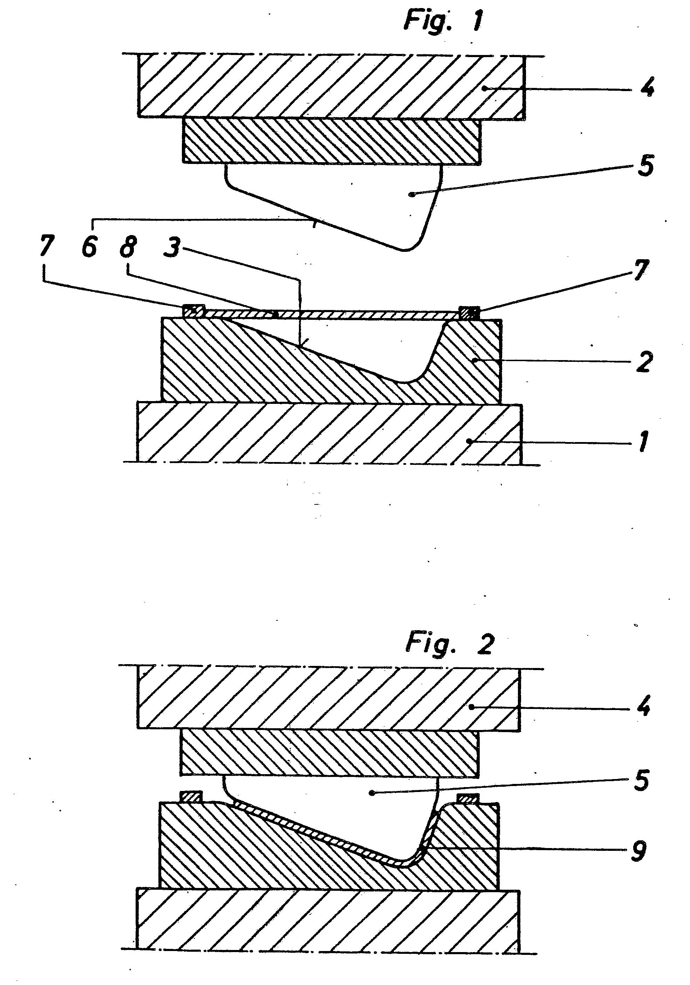

Die Figuren 1 und 2 zeigen in schematischer Darstellung in zwei verschiedenen Phasen die Herstellung eines Schichtstoff-Formteiles mit Hilfe eines Formwerkzeuges in einer Presse durch Verpressen des beschriebenen Stapels.

Fig. 1 zeigt das Formwerkzeug in geöffnetem Zustand. Es besteht aus einem am Pressengestell 1 montierten beheiz- oder kühlbaren unteren Formwerkzeugteil 2, dessen konkav ausgebildete Preßfläche 3 zwei aufeinander senkrecht stehende ebene Bereiche aufweist, die durch einen zylindermantelförmig gekrümmten Bereich miteinander verbunden sind. Der vertikal absenkbare Preßstempel 4 trägt den ebenfalls beheiz- oder kühlbaren oberen Formwerkzeugteil 5 mit einer der unteren Preßfläche 3 entsprechenden konvex ausgebildeten Preßfläche 6. Am unteren Formwerkzeugteil sind ferner zum Positionieren des Preßgutes dienende Anschläge 7 angebracht.

Bei diesem ersten Ausführungsweg des Verfahrens wird das Formwerkzeug in gekühltem Zustand eingesetzt. Der als Preßgut dienende zu verpressende Stapel 8 wird zunächst in einem z. B. mit einer Hochfrequenzheizung ausgerüsteten Vorwärmofen auf eine Temperatur von 160°C durchgewärmt und danach zwischen den beiden Anschlägen 7 auf den unteren Formwerkzeugteil aufgesetzt. Hierauf wird der Preßstempel 4 mit dem oberen Formwerkzeugteil 5 langsam abgesenkt, wobei das Preßgut 8 verformt und in das Formwerkzeug hineingezogen wird. Nach beendetem Absenken des oberen Formwerkzeugteils 5 wird nun das verformte Lagenpaket 9 während einer Preßzeit von 5 min bis auf etwa Raumtemperatur abgekühlt, das Formwerkzeug durch Hochfahren des Preßstempels 4 geöffnet und danach das Lagenpaket entnommen. Nun werden die verformten Einzellagen wieder voneinander getrennt und die als Gleit- bzw. Trennschichten dienenden Papiere entfernt.

Auf die miteinander zu verklebenden, angeschliffenen Oberflächen der verformten Einzellagen wird nun jeweils — wie unter Punkt C allgemein erläutert — ein Bindemittel aufgebracht, welches hier ein warmhärtender Kleber auf Resorcinharzbasis ist. Während sich das Bindemittel noch im nassen Zustand befindet, werden die Einzellagen wieder zu dem verformten Lagenpaket zusammengefügt, in eine beheizbare Formhaltevorrichtung eingebracht, die — ähnlich wie das anhand der Figuren beschriebene Formwerkzeug — aus einer Matrize und einer Patrize besteht, zwischen denen das verformte Lagenpaket eingeklemmt wird, und bei erhöhter Temperatur solange darin belassen, bis das Bindemittel ausgehärtet ist. Der so hergestellte Schichtstoff-Formteil wird dann der Formhaltevorrichtung entnommen und schließlich zur Herstellung genauer Abmessungen bzw. glatter Randflächen an seinen Rändern besäumt.

Ein zweiter Ausführungsweg des erfindungsgemäßen Verfahrens sei nachstehend anhand von zwei weiteren Beispielen beschrieben.

## Beispiel 2

Zur Herstellung eines Schichtstoff-Formteils mit einer Plattenstärke von 10 mm werden eingesetzt:

2  Decklagen mit Dicken von 0,6 mm, von der Art wie in Punkt B beschrieben,
14  Kernlagen mit Dicken von 0,6 mm, wie in Punkt A beschrieben, sowie
15  Klebefilme (beschrieben in Punkt D).

Zur Bildung des Stapels werden auf einem plattenförmigen Support zunächst — mit der Dekoroberfläche nach unten — eine Decklage, darauf 14mal jeweils abwechselnd ein Klebefilm und eine Kernlage, dann der letzte Klebefilm und schließlich — mit der Dekoroberfläche nach oben — die zweite Decklage aufgeschichtet.

Bei diesem zweiten Ausführungsweg des Verfahrens wird das Formwerkzeug nun in beheiztem Zustand eingesetzt. Der als Preßgut (siehe Fig. 1) dienende Stapel 8 wird zunächst — analog wie im Beispiel 1 beschrieben — auf eine Temperatur von 140°C durchgewärmt und in dem Formwerkzeug verformt. Die Klebefilme dienen dabei als Gleitschichten, welche das beim Verformen stattfindende Aneinandergleiten der Einzellagen begünstigen. Bei geschlossenem Formwerkzeug wird dann während einer Preßzeit von 5 min ein bei einer Temperatur der Preßoberflächen von etwa 150°C auf das Preßgut wirkender Druck von ca. 400 kPa aufrechterhalten.

Während dieser Preßzeit tritt eine Aushärtung der in den Einzellagen und Klebefilmen enthaltenden Kunstharze bzw. Bindemittel sowie eine gegenseitige innige Verbindung der einzelnen Lagen des Stapels ein. Der fertige Schichtstoff-Formteil wird dem Formwerkzeug noch heiß entnommen und nach dem Abkühlen besäumt. Der bei diesem Beispiel erreichbare kleinste Krümmungsradius an der konkaven Oberfläche des so erzeugten Schichtstoff-Formteils beträgt etwa 20 mm.

In besonderen Fällen kann auch — gemäß einer Abwandlung des beschriebenen Verfahrens — auf eine Vorwärmung des zu verpressenden Stapels verzichtet werden. Man geht dann so vor, daß man den kalten Stapel als Preßgut 8 (siehe Fig. 1) in die beheizte Preßform einbringt, den Preßstempel 4 dann zunächst soweit absenkt, daß der obere Formwerkzeugteil 5 das Preßgut berührt, wonach unter gleichzeitiger Erwärmung des Preßgutes durch Wärmeaufnahme aus dem beheizten Formwerkzeug durch weiteres Absenken des Preßstempels 4 das Formwerkzeug so langsam geschlossen wird, daß keine Rißbildung an den Einzellagen des Stapels auftritt.

## Beispiel 3

Zur Herstellung eines Schichtstoff-Formteils mit einer Plattenstärke von etwa 10 mm und sonst im wesentlichen gleichen Eigenschaften wie der Formteil gemäß Beispiel 2 werden eingesetzt:

2  Decklagen mit Dicken von 1,0 mm, von der Art wie in Punkt B beschrieben, sowie
4  Kernlagen mit Dicken von 2,0 mm, wie in Punkt A beschrieben.

Auf die miteinander zu verklebenden, angeschliffenen Oberflächen dieser als Deck- bzw. Kernlagen dienenden Einzellagen wird jeweils — wie unter Punkt C allgemein erläutert — ein Bindemittel aufgebracht, welches bei dem vorliegenden Beispiel ein Zweikomponentenkleber auf Epoxydharzbasis ist. Während sich das Bindemittel noch im nassen Zustand befindet, werden die Einzellagen danach zu dem verpressenden Stapel verschlichtet. Dazu werden — analog wie gemäß Beispiel 2 — auf einem plattenförmigen Support zunächst, mit der Dekoroberfläche nach unten, eine der Decklagen, danach die vier Kernlagen und auf diese schließlich, mit der Dekoroberfläche nach oben, die zweite Decklage aufgeschichtet.

Der auf diese Weise gebildete Stapel wird nun in einem Vorwärmofen auf 150°C erwärmt und danach — so wie anhand von Beispiel 1 beschrieben — in einem Formwerkzeug verformt. Dabei bilden die sich noch im nassen Zustand befindlichen Bindemittelschichten Gleitschichten, die das beim Verformen auftretende Aneinandergleiten der Einzellagen besonders wirksam begünstigen. Bei geschlossenem Formwerkzeug wird dann während einer Preßzeit von 3 min bei einer Temperatur von 170°C das verformte Lagenpaket zum fertigen Schichtstoff-Formteil ausgehärtet, der dem Formwerkzeug noch heiß entnommen und nach Abkühlung besäumt wird. Bei diesem Beispiel kann ein kleinster Krümmungsradius am Schichtstoff-Formteil von etwa 40 mm erreicht werden.

## Patentansprüche:

1. Verfahren zum Herstellen von Schichtstoff-Formteilen, welche die Form von gebogenen Platten mit jeweils ein oder mehreren zylindermantelförmigen Oberflächenbereichen haben, dadurch gekennzeichnet, daß ein Stapel (8) bestehend aus mehreren bei erhöhter Temperatur verformbaren und an den stapelinnenseitig zu liegen kommenden Oberflächen angeschliffenen Kunstharzschichtpreßstoffplatten der Postforming-Qualität als Einzellagen und aus zwischen diesen Einzellagen angeordneten Gleitschichten auf Verformungstemperatur gebracht und in einem Formwerkzeug verpreßt wird, wobei der Stapel als Lagenpaket (9) zumindest im wesentlichen die endgültige Form des Formteils annimmt und wonach diese Einzellagen durch ein aushärtendes Bindemittel miteinander verbunden werden.

2. Verfahren nach Anspruch 1, dadurch gekennzeichnet, daß der Stapel (8) vor seinem Einbringen in das Formwerkzeug in einer Heizvorrichtung einer Vorwärmung unterzogen und/oder auf Verformungstemperatur aufgeheizt wird.

3. Verfahren nach Anspruch 1 oder 2, dadurch gekennzeichnet, daß der Stapel (8) in das beheizte Formwerkzeug eingebracht und dort vor dem Verformen auf Verformungstemperatur aufgeheizt wird.

4. Verfahren nach Anspruch 2, dadurch gekennzeichnet, daß zum Miteinanderverbinden der Einzellagen des Lagenpakets (9) diese zunächst voneinander getrennt, die Gleitschichten entfernt und die Einzellagen dann nach Beschichtung mit einem aushärtenden Bindemittel wieder zu dem verformten Lagenpaket (9) zusammengefügt in einer Formhaltevorrichtung aufgenommen werden, wo sich die Einzellagen unter Aushärtung miteinander verbinden.

5. Verfahren nach Anspruch 4, dadurch gekennzeichnet, daß als Gleitschichten jeweils zwischen den Einzellagen eingelegte Papiere eingesetzt werden.

6. Verfahren nach einem der Ansprüche 1 bis 3, dadurch gekennzeichnet, daß als Gleitschichten bei der Verformungstemperatur aktivier- und aushärtbare Bindemittelschichten eingesetzt werden, die beim Verpressen des Stapels aushärten und die Einzellagen dabei miteinander verbinden.

7. Verfahren nach Anspruch 6, dadurch gekennzeichnet, daß als Bindemittelschichten im Stapel Klebefilme eingesetzt werden, die aus mit hitzehärtenden Harzen imprägnierten Trägerlagen bestehen.

8. Verfahren nach Anspruch 6, dadurch gekennzeichnet, daß die Bindemittelschichten als Beschichtungen aus hitzehärtenden Harzen auf Oberflächen von Einzellagen aufgebracht werden.

## Claims

1. Process for the manufacture of laminate mouldings which have the shape of bent sheets each possessing one or more surface regions in the shape of a cylinder barrel, characterised in that a stack (8) consisting of a plurality of synthetic resin laminate sheets of post-forming quality, which are mouldable at elevated temperature and are surface-ground on the surfaces which are on the inside of the stack, said laminate sheets being arranged as individual layers, with slip layers provided between these individual layers, is brought to the moulding temperature and is pressed in a moulding tool, whereupon the stack, in the form of a layer packet (9), assumes, at least substantially, the final form of the moulding, the said individual layers being subsequently bonded to one another by means of a hardening binder.

2. Process according to Claim 1, characterised in that the stack (8), before introduction into the moulding tool, is preheated, and/or heated to the moulding temperature, in a heating apparatus.

3. Process according to Claim 1 or 2, characterised in that the stack (8) is introduced into the heated moulding tool and ist heated therein to the moulding temperature prior to moulding.

4. Process according to Claim 2, characterised in that for the purpose of bonding the individual layers of the layer packet (9) to one another, the layers are first separated from one another, the slip layers are removed and the individual layers are then coated with a hardening binder, reassembled to reconstitute the moulded layer packet (9) and accommodated in a shape-retaining device, where the individual layers bond to one another, whilst hardening occurs.

5. Process according to Claim 4, characterised in that the slip layers employed are sheets of paper inserted between the individual layers.

6. Process according to one of Claims 1 to 3, characterised in that the slip layers employed are binder layers which can be activated and hardened at the moulding temperature, which binder layers harden when the stack is pressed and thereby bond the individual layers to one another.

7. Process according to Claim 6, characterised in that the binder layers employed in the stack are adhesive films which consist of carrier layers impregnated with thermosetting resins.

8. Process according to Claim 6, characterised in that the binder layers are applied as coatings of thermosetting resins onto the surfaces of individual layers.

## Revendications

1. Procédé de fabrication de pièces profilées en matériau stratifié présentant la forme de plaques cintrées comportant chacune une ou plusieurs zones de surface dont la configuration est celle d'une enveloppe cylindrique, caractérisé en ce qu'une pile (8) composée, d'une part, de plusieurs plaques en matériau stratifié déformable par pression, à base de résine synthétique de la qualité »postforming«, plaques déformables à température élevée, constituant des couches unitaires et dont les surfaces situées à l'intérieur de la pile sont poncées et, d'autre part, de couches de glissement disposées entre ces couches unitaires, est portée à la température de déformation et pressée dans un outil de façonnage, cette pile épousant alors en tant que paquet de couches (9) au moins sensiblement la forme définitive de la pièce profilée, après quoi ces couches unitaires sont reliées entre elles par un liant durcissable.

2. Procédé selon la revendication 1, caractérisé en ce que la pile (8) est préchauffée dans un dispositif de chauffage et/ou chauffée à la température de déformation, avant d'être introduite dans l'outil de façonnage.

3. Procédé selon la revendication 1 ou 2, caractérisé en ce que la pile (8) est introduite dans l'outil de façonnage chauffée et y est portée à la température de déformation avant le façonnage par pression.

4. Procédé selon la revendication 2, caractérisé en ce qu'en vue de relier entre elles les couches unitaires du paquet de couches (9), celles-ci sont d'abord séparées, les couches de glissement sont écartées, les couches unitaires sont ensuite réunies de nouveau après application sur celles-ci d'un liant durcissable pour constituer le paquet de couches façonné (9), puis elles sont introduites dans un dispositif de maintien de forme où les couches unitaires sont reliées entre elles par l'effet du durcissement.

5. Procédé selon la revendication 4, caractérisé en ce que l'on utilise comme couches de glissement des feuilles de papier interposées entre chaque couche unitaire et la couche unitaire voisine.

6. Procédé selon une des revendications 1 à 3, caractérisé en ce que l'on utilise, comme couches de glissement, des couches de liant activables et durcissables à la température de déformation, ces couches de liant étant durcies lors du pressage de la pile de manière à relier ainsi les couches unitaires entre elles.

7. Procédé selon la revendication 6, caractérisé en ce que l'on utilise, comme couches de liant, dans la pile des pellicules collantes constituées par des couches de support imprégnées de résines thermodurcissables.

8. Procédé selon la revendication 6, caractérisé en ce que les couches de liant sont appliquées sous forme d'enduits de résines thermodurcissables sur des surfaces de couches unitaires.

## Fig. 1

## Fig. 2